# EUROPÄISCHE PATENTSCHRIFT

(11) **EP 3 036 493 B1**
(45) Veröffentlichungstag und Bekanntmachung des Hinweises auf die Patenterteilung: **21.04.2021**
(21) Anmeldenummer: 14743986.3
(22) Anmeldetag: 30.04.2014
(51) Int. Cl.: F28D 20/00, B29C 35/04, F24D 3/10, B29C 35/16

(54) **TEMPERIER- UND WÄRMERÜCKGEWINNUNGSSYSTEM FÜR WENIGSTENS EINE MIT EINEM FLUID TEMPERIERBARE MASCHINE UND VERFAHREN ZUM BETREIBEN EINES TEMPERIER- UND WÄRMERÜCKGEWINNUNGSSYSTEMS**
TEMPERATURE CONTROL AND HEAT RECOVERY SYSTEM FOR AT LEAST ONE MACHINE WHOSE TEMPERATURE CAN BE CONTROLLED BY MEANS OF A FLUID, AND METHOD FOR OPERATING A TEMPERATURE CONTROL AND HEAT RECOVERY SYSTEM
SYSTÈME DE RÉGULATION DE TEMPÉRATURE ET DE RÉCUPÉRATION DE CHALEUR POUR AU MOINS UNE MACHINE DONT LA TEMPÉRATURE PEUT ÊTRE RÉGULÉE AU MOYEN D'UN FLUIDE ET PROCÉDÉ POUR FAIRE FONCTIONNER UN SYSTÈME DE RÉGULATION DE TEMPÉRATURE ET DE RÉCUPÉRATION DE CHALEUR

(30) Priorität: 20.08.2013 DE 102013108998
(43) Veröffentlichungstag der Anmeldung: 29.06.2016
(73) Patentinhaber: GWK-Kuhlmann Gesellschaft Für Wärme-, Kälte- und Klimatechnik mit Beschränkter Haftung, 33154 Salzkotten (DE)
(72) Erfinder: KUHLMANN, Fred, 33154 Salzkotten (DE)
(74) Vertreter: Tarvenkorn, Oliver
(86) Internationale Anmeldenummer: PCT/DE2014/100147
(87) Internationale Veröffentlichungsnummer: WO 2015/024554

(56) Entgegenhaltungen:
- EP-A1- 2 354 680
- EP-A2- 2 530 418
- WO-A2-2009/013781
- DE-A1-102009 011 715
- DE-A1-102012 100 996
- DE-U1-202010 014 435

## Beschreibung

Die Erfindung betrifft ein Temperier- und Wärmerückgewinnungssystem für wenigstens eine mit einem Fluid temperierbare Maschine, bei welchem das Fluid von wenigstens einer Wärmequelle und/oder wenigstens einem Wärmespeicher zu der temperierbaren Maschine geleitet wird.

Bestimmte Produktionsmaschinen wie insbesondere Kunststoffverarbeitungsmaschinen müssen vor Beginn der Produktion auf ein bestimmtes Temperaturniveau aufgeheizt werden, damit die verarbeiteten Kunststoffmassen fließ- und/oder reaktionsfähig sind. Die großen aufzuheizenden Massen der metallischen Werkstoffe, aus denen die Formen gebildet sind, die zudem eine hohe Wärmekapazität besitzen, führen zu großen benötigten Wärmemengen, die über einen Zeitraum von mehreren Stunden zugeführt werden müssen, um eine Änderung des Temperaturniveaus in den Formen zu erreichen. Wird die Aufheizung der Produktionsmaschinen über elektrische Heizelemente vorgenommen, so entstehen vor Produktionsbeginn hohe Lastspitzen. Müssen dann noch mehrere Produktionsmaschinen gleichzeitig aufgeheizt werden, so werden die Belastungsgrenzen einer üblichen Niederspannungsunterverteilung eines Produktionsbetriebes erreicht. Die Aufheizung der Produktionsmaschinen vor Produktionsbeginn ist dann nur noch in Gruppen hintereinander möglich.

Im Zuge der laufenden Produktion besteht dann bei einigen Produktionsmaschinen das Problem, dass durch Reibungswärme oder, insbesondere im Falle der Verarbeitung duroplastischer Kunststoffe, durch exotherme chemische Reaktionen, mehr Wärme im Prozess entsteht als durch Abstrahlung an die Umgebung abgeführt wird. Dann ist es erforderlich, das notwendige Temperaturniveau durch aktive Kühlung aufrecht zu halten, wozu nach dem Stand der Technik Wasser oder ein anderes Kühlmittel durch den Kühlkreislauf der Produktionsmaschine geleitet wird, das in einer Kältemaschine gekühlt werden muss. Der hohe Wärmebedarf vor Produktionsbeginn und der Bedarf an Kühlung während der Produktion lässt es naheliegend erscheinen, das erwärmte Kühlwasser für einen späteren Aufheizprozess zwischenzuspeichern. Bekannte Systeme leiten das Kühlwasser über einen Wärmetauscher, der mit einem Wärmespeicher verbunden ist.

Nach dem zweiten Hauptsatz der Thermodynamik kann auch über große verfügbare Wärmemengen keine Temperaturerhöhung über die Temperatur des Kühlmittels hinaus erfolgen. Somit werden üblicherweise beim Betrieb von Wärmetauschern große Mengen an nur mäßig warmem Wasser erhalten, die in großen, isolierten Behältern zwischengespeichert werden müssen und die zum späteren Aufheizprozess nur bedingtbeitragen können, weil das Temperaturniveau eben nicht ausreichend ist.

Ein gattungsgemäßes Temperier- und Wärmerückgewinnungssystem ist in der DE 10 2009 011 715 A1 beschrieben. Dabei sind die Mischkammer jedoch baulich nicht unterteilt. Eine direkte Durchströmung der Mischkammer in beiden Richtungen zwischen Primär- und Sekundärkreisanschlüssen ist jedoch nicht möglich, so dass damit nicht sowohl eine Erwärmung wie auch eine Kühlung von im Sekundärkreislauf angeschlossenen Maschinen möglich ist.

Es stellt sich somit die Aufgabe, ein Temperier- und Wärmerückgewinnungssystem für wenigstens eine mit einem Fluid temperierbare Produktionsmaschine anzugeben, mit dem eine effektive Wärmerückgewinnung der in der Kühlphase anfallenden Wärmemengen möglich ist und mit dem auch eine Aufheizung der Produktionsmaschinen bis auf ein hohes Temperaturniveau möglich ist.

Diese Aufgabe wird durch ein Temperier- und Wärmerückgewinnungssystem mit den Merkmalen von einem der Ansprüche 1-3 und durch ein Verfahren nach Anspruch 6 gelöst.

Die Lösung beruht auf folgenden Grundprinzipien:
- Sammeln von Wärmeenergie auf unterschiedlichen Temperaturniveaus;
- Speicherung von Wärmeenergie auf unterschiedlichen Temperaturniveaus;
- Bedarfsgerechte Anpassung von Wärmeenergie auf unterschiedliche Temperaturniveaus; und
- Verwertung von Wärmeenergie auf unterschiedlichen Temperaturniveaus.

Die Erfindung beruht also im Wesentlichen darauf, dass eine Aufteilung in wenigstens drei Fluidströme erfolgt, die jeweils ein bestimmtes Temperaturniveau einnehmen und die in Teilwärmespeichern, die dem jeweiligen Temperaturniveau zugeordnet sind, gespeichert werden. Die Temperaturniveaus sind dabei aber nicht fest auf einen absoluten. Temperaturwert eingestellt, sondern können sich dynamisch ändern. Sie sind zunächst qualitativ zu sehen, so dass dann, wenn ein andauernder Produktionsprozess mit Aufheiz- und Kühlphasen läuft, zwischen Ihnen jeweils ein ausreichendes Temperaturgefälle besteht und sich die Absolutwerte der Temperatur für einzelne oder alle Zonen verändern.

überraschend wurde also durch die Erfindung gefunden, dass ohne eine stoffliche Trennung des Fluids auf der Primär und der Sekundärseite, wie sie herkömmlich über Wärmetauscher bewirkt wird, die überwiegenden Mengen an Fluid, die auf verschiedenen Temperaturniveaus vorliegen, von der Primär- zur Sekundärseite oder umgekehrt durchfließen können. Es treten zwar gewisse Verluste durch randseitige Vermischungen der in der offenen Mischkammer nebeneinander anliegenden, gegenläufigen Fluidströme auf, jedoch sind diese bei richtiger Dimensionierung der Mischkammer entsprechend den hier beschriebenen Ausführungsformen so gering, dass diese Verluste durch die gegenüber der Verwendung von Wärmetauschern wesentlich effektivere Wärmerückgewinnung weitaus kompensiert werden.

Während herkömmlich durch die Trennung von Primär und Sekundärkreislauf über Wärmetauscher immer nur der stark zeitabhängige Prozess der Wärmeübertragung genutzt werden kann, wird durch das erfindungsgemäße Temperier- und Wärmerückgewinnungssystem einfach ein vollständiger Austausch des Temperierfluids von der Primär zur Sekundärseite und wieder zurück vorgenommen. Bei der Verwendung von Wärmetauschern müssen hingegen sehr große Austauschflächen vorgesehen werden, um pro Zeiteinheit ausreichende Wärmemengen übertragen zu können, was hohe Kosten und Stellflächen im Bereich jeder angeschlossenen Produktionsmaschine nach sich zieht. Da in der zur Verfügung stehenden Durchflusszeit kein vollständiger Ausgleich der Temperaturniveaus möglich ist, fällt nach dem Stand der Technik überwiegend Mitteltemperaturwasser an, und davon viel.

Nach der Erfindung jedoch wird, von geringen Leitungsverlusten abgesehen, der gesamte Wärmeinhalt vollständig von der Sekundär- auf die Primärseite übertragen bzw. umgekehrt, da ja das Wärme tragende Medium vollständig übergeleitet wird. Erfindungsgemäß wird also einfach Fluid mit dem am besten passenden Temperaturniveau von der Quelle auf der Sekundärseite zu dem vom Temperaturniveau am besten passenden Teilwärmespeicher durchgeleitet oder umgekehrt vom Teilwärmespeicher zu einer Wärmesenke. Die Mischerweicheneinheit funktioniert ähnlich wie eine Weiche im Bahnverkehr, denn sie verteilt drei oder mehr Primärleitungen wechselweise auf zwei Sekundärleitungen und umgekehrt.

Da somit erfindungsgemäß keine Wärmeübertragung zwischen zwei Medien stattfindet, sondern ein unmittelbarer Austausch des Wärmeträgers, kann das erfindungsgemäße Temperier- und Wärmerückgewinnungssystems schon bei sehr kleinen Temperaturdifferenzen zwischen den mindestens drei Temperaturniveaus betrieben werden, z.B. wie folgt:
- Hochtemperaturbereich ca. 30°C
- Mitteltemperaturbereich ca. 25"C und
- Niedrigtemperaturbereich ca. 20°C,

Für den Betrieb des Temperier- und Wärmerückgewinnungssystems in einem kunststoffverarbeitenden Betrieb sind beispielsweise folgende Temperaturniveaus gut geeignet:
- Hochtemperaturbereich ca. 80° bis 90° C
- Mitteltemperaturbereich. ca. 50 - 65°C
- Niedrigtemperaturbereich ca. 20°c

Zum erstmaligen Beginn einer Produktion können zwischen den Teilwärmespeichern also zunächst kleinere Temperaturunterschiede bestehen. Kommt es zu einer temporären Überhitzung von Maschinen mit entsprechendem Kühlbedarf, so kann das Niveau des Niedrigtemperaturbereichs auf das Niveau des Mitteltemperaturbereichs angehoben werden oder das des Mitteltemperaturbereichs auf das des Hochtemperaturbereichs.

Die Erfindung sieht dazu einen durchgängig verlegten Mehrfach-Rohrstrang mit wenigstens einer Primärleitung je Temperaturniveau vor, von denen jeweils eine mit dem· entsprechenden Teilwärmespeicher verbunden ist.

Erfindungswesentlich ist vor allem die Verwendung einer nach der Erfindung ausgebildeten Mischerweicheneinheit. Sie ersetzt sowohl elektrisch betriebene Temperiergeräte als auch Kühlaggregate. Es handelt sich bei den erfindungsgemäßen Mischerweicheneinheiten um Vorrichtungen, die eine insbesondere vertikal ausgerichtete Mischkammeraufweisen, in der die von den Teilwärmespeicher her rührenden Primärleitungen wie auch die Vor- und die Rücklaufleitung eines Sekundärkreislaufes, in den die Produktionsmaschinen eingebunden ist, direkt münden, und zwar münden die Leitungen von Primär und Sekundärkreislauf an gegenüberliegenden Seiten. Die Zu- und Abflüsse können über Ventile und Pumpen gesteuert werden.

Erfindungsgemäß ist die Mischkammer zwischen Primär und Sekundärkreislauf offen. Es wurde überraschend gefunden, dass innerhalb einer Mischkammer getrennte Fluidströme direkt von dem Primär- in den Sekundärkreislauf und zurück vorliegen können, wobei die Fluidströme sogar gegenläufig sind und ein unterschiedliches Temperaturniveau repräsentieren. Wichtig ist dabei nur, dass innerhalb der Weiche ein Durchfluss von einem Primäranschluss zu einem Sekundäranschluss direkt möglich ist, ohne dass sich die Ströme kreuzen. Dazu sind die Primärleitungen dem von ihnen repräsentierten Temperaturniveau entsprechend abgestuft in einer Reihe angeordnet, also von heiß nach kalt oder umgekehrt. Die Sekundärleitungen hingegen sind vorzugsweise so angeordnet, dass zu zwei in der Nähe befindlichen Mündungen von Primärleitungen etwa gleiche Fließwege ausgebildet werden.

Vorzugsweise sind die Sekundärleitungen den Primärleitungen gegenüberliegend angeordnet und liegen dabei jeweils mittig zwischen zwei Primärleitungen. Damit ergibt sich besonders der Charakter einer umschaltbaren Weiche, wie auch bei einer Bahnweiche nur eine Umschaltung von einem Gleis auf zwei benachbarte Gleise erfolgen kann.·

Jede Mischerweicheneinheit ist somit mit den Teilwärmespeichern mit je wenigstens drei Rohrleitungen für unterschiedliche Medientemperaturen verbunden. Eine Leitung ist für den Hochtemperaturbereich, eine Leitung für den Niedrigtemperaturbereich und eine zusätzliche Leitung für den Mitteltemperaturbereich vorgesehen. Durch diese Rohrleitungen kann die Wärme in ihrem eigenen Temperaturbereich transportiert und im passenden Temperaturbereich des vorzugsweise als Wärmespeicher verwendeten Schichtspeichers eingespeist bzw. abgezapft werden.

Dabei ist eine vertikale Ausrichtung der Mischkammer vorgesehen. Mit "vertikaler Ausrichtung" ist im Sinne der vorliegenden Erfindung gemeint,· dass die Bauhöhe in vertikaler Richtung so groß ist, dass bei den gegebenen Strömungsgeschwindigkeiten eine Temperaturschichtung in der Mischkammer entsprechend den Temperaturniveaus der Primärleitungen möglich ist. Die Anordnung der Primär- und Sekundärleitungen ist derart, dass das jeweilige höchste Temperaturniveau oben durch die Mischerweicheneinheit geführt wird und das niedrigste unten. Die Primärleitung für den Mitteltemperaturbereich mündet auf der Primärseite in der Mitte zwischen den Primärleitungen für den· Nieder- und den Hochtemperaturbereich.

Günstig sind in diesem Zusammenhang Querschnitte, bei der die Höhe der Mischkammer mindestens das 3fache der in Strömungsrichtung gemessenen Breite beträgt.

Die Fließquerschnitte innerhalb der Mischweiche sollten wenigstens dem Stachen Querschnitt der Anschlüsse des Sekundärkreislaufes entsprechen. Damit werden die Strömungsgeschwindigkeiten innerhalb der Mischkammer soweit herabgesetzt, dass eine dem Temperaturniveau entsprechende Entmischung erfolgen kann. Dies gilt insbesondere im sogenannten "Ernter-Betrieb", bei dem Wärme von einer Wärmequelle abgezogen wird.

Besonders vorteilhaft ist es, in dem erfindungsgemäßen Temperier- und Wärmerückgewinnungssystem die Teilwärmespeicher durch unterschiedliche Temperaturzonen an einem Schichtspeicher zu bilden. Durch den Schichtspeicher wird die nach der Erfindung mögliche dynamische Änderung der Temperaturniveaus am besten unterstützt. Durch den Schichtspeicher ist rein physikalisch, ohne zusätzliche Regel- und Fördereinrichtungen, gewährleistet, dass eine qualitative Unterteilung in einen Hochtemperaturbereich an der Oberseite des Schichtspeichers und einen Niedrigtemperaturbereich in dessen Bodenbereich besteht. Entsprechend gehen die Primärleitungen für diese Niveaus vom Bodenbereich bzw. einem oberen Bereich des Schichtspeichers ab. Eine Primärleitung für den Mitteltemperaturbereich kann in einem mittleren Höhenbereich abgegriffen werden. Der Schichtspeicher gewährleistet aufgrund seiner Konstruktion eine nur minimale Vermischung der Fluidmengen in den unterschiedlichen Temperaturniveaus.

Wie oben beschrieben, ist es ein Vorteil des erfindungsgemäßen Temperier- und Wärmerückgewinnungssystems, dass sich die Temperaturverteilung zwischen den

Niveaus dynamisch ändern kann und nicht auf absolute Temperaturwerte begrenzt ist. Dies wird durch das Wesen des Schichtspeichers unterstützt, denn die Temperaturschichtung darin erfolgt stets automatisch anhand des zwischen Ober- und Unterseite herrschenden Temperaturgefälles, und zwar auch, wenn in einem bestimmten Temperaturniveau Fluidmengen zugeführt oder abgeführt werden.

Der Einsatz einer Wärmepumpe am Schichtspeicher als direkt wirkende Wärmequelle ist optional und kann als Absicherung dienen, falls in den jeweiligen Temperaturbereichen nicht genug Wärme gespeichert werden sollte, um die Produktionsmaschinen oder andere Wärmesenken zu versorgen.

Ebenso können Konvektorflächen vorgesehen werden, um bedarfsweise den Niedrigtemperaturbereich zu kühlen. Das Fluid zirkuliert dann durch vorzugsweise im Außenbereich aufgestellte Konvektoren, um Wärme an die Umgebung abzugeben. Möglich sind auch eine Zirkulation über offene Wasserflächen im Außenbereich oder eine Zuführung von kaltem Frischwasser als Notmaßnahme.

Bei dem erfindungsgemäßen Temperier- und Wärmerückgewinnungssystems mit wenigstens einer Mischerweicheneinheit und einer Schichtspeicherung ergeben sich folgende Vorteile bei der Ausnutzung der anfallenden Wärmeenergie:
Durch das Konzept der Temperaturtrennung und des Wärmetransports über getrennte Rohrleitungen, gesteuert und getrennt durch die Mischerweichen, wird die Strömung und Vermischung es Wassers im Schichtspeicher auf ein Minimum reduziert.

Der Schichtspeicher gleicht die zeitlichen Schwankungen bei Anfall und Verbrauch der Wärmeenergie aus, insbesondere nach Betriebspausen und Wochenenden.

Ziel ist es, möglichst viel qualitativ hochwertige Energie von den Quellen mittels der Mischerweichen zu sammeln, um sie dann mittels der>Mischerweichen wieder den Wärmesenken zur Verfügung stellen zu können. Gleichzeitig soll den Senken nur die notwendigste Energie bereitgestellt werden, um unnötige Energieverluste zu vermeiden.

Die beiden typischen Betriebsweisen des erfindungsgemäßen Temperier- und Wärmerückgewinnungssystem werden im Zusammenhang mit einer Wärmequelle und wenigstens einer Wärmesenke nachfolgend beschrieben. Wärmequellen sind insbesondere Produktionsmaschinen oder gesonderte Kühleinrichtungen dafür, die im laufenden Betrieb gekühlt werden müssen. Wärmesenken sind Wärmeverbraucher, also Produktionsmaschinen z. B. für die Kunststoffverarbeitung während der Aufheizphase oder Maschinen, bei denen Wärmeverluste während der Produktion ausgeglichen werden müssen.

Ausgegangen wird von Teilwärmespeichern, die jeweils mit Fluid auf einem bestimmten Temperaturniveau gefüllt sind. Eine Kunststoffspritzgussmaschine muss im Dosierbereich so weit wie möglich vorgeheizt werden, damit der Energieverbrauch für die elektrischen Heizelemente, die die Aufheizung auf die Schmelzetemperatur von meist über 200°C bewirken, reduziert werden kann. Zugleich muss das Spritzgießwerkzeug vorgeheizt werden, um die Fließfähigkeit der eingespritzten Schmelze . über die für die Füllung der Formnester benötigte Zeit aufrecht zu halten. Dazu wird das vorzugsweise als Temperierfluid eingesetzte Wasser aus dem Hochtemperaturbereich aus dem Wärmespeicher abgezapft und durch die Mischerweicheneinheit in den Vorlauf des Sekundärkreislaufes geleitet, der sich in diesem Fall oben an die Mischkammer anschließt. In der Spritzgießmaschine kühlt sich das Wasser zunächst auf ein Niedrigtemperaturniveau ab. Der Rücklauf von der Maschine auf der Sekundärseite endet unten in der Mischkammer. Geöffnet wird auf der Primärseite auch das Ventil an der Primärleitung für den Niedrigtemperaturbereich. Das abgekühlte Fluid wird darüber zurück in den Niedrigtemperaturbereich im Schichtspeicher geführt. Mit zunehmender Aufheizung der Spritzgießmaschine besitzt das Wasser im Rücklauf eine zunehmend höhere Temperatur, so dass dann die Niedrigtemperatur-Primärleitung gesperrt wird und die Rückführung aus dem Sekundärkreislauf über die Mitteltemperatur-Primärleitung in den Mitteltemperatur-Teilwärmespeicher erfolgt.

.Für den Betrieb mit einer Wärmequelle erfolgt die Strömung umgekehrt. Soll beispielsweise eine Maschine gekühlt werden, in der Formmassen exotherm aushärten, so wird Wasser aus der Niedrigtemperatur-Primärleitung mit Hilfe einer Pumpe in den Sekundärkreislauf geleitet. In diesem Fall ist der Vorlauf des Sekundärkreislaufs unten an der Mischerweicheneinheit, auf Höhe des Niedrigtemperaturniveaus, anzuschließen. Der Rücklauf liegt dann entsprechend oben an der

Mischerweicheneinheit und geht in die Hochtemperatur-Primärleitung über. Dadurch wird der Hochtemperaturbereich gefüllt, mit dem der am nächsten Werktag folgende Aufheizprozess besonders effektiv unterstützt werden kann.

Durch die bevorzugte Verwendung des Schichtspeichers wird bewirkt, dass nach und nach auch das Mitteltemperaturniveau angehoben wird, eine konstante Entnahmehöhe der Mitteltemperatur-Primärleitung am Wärmespeicher vorausgesetzt. Damit kann das Aufheizen von Raumtemperatur aus auch erst über den Mitteltemperaturbereich gestartet werden, bevor für die Endphase Wasser aus dem Hochtemperaturbereich zugeführt wird.

Das erfindungsgemäße Temperier- und Wärmerückgewinnungssystem ist also in sehr vielfältiger Weise einsetzbar, und mithilfe einer elektronischen Regelungseinrichtung kann eine optimale Abstimmung der Aufheiz-und Kühlprozesse vorgenommen werden.

Die Mischerweicheneinheit, die Kernstück der Erfindung ist, kann für die Verwendung mit einer Senke oder eine Quelle im Sekundärkreislauf angepasst werden, wie an den nachfolgend beschriebenen Ausführungsbeispielen erläutert wird.

Da der direkte Wärmeträgeraustausch schnell möglich ist, ist es mit dem erfindungsgemäßen System und dem Verfahren sogar möglich, eine Produktionsmaschine innerhalb eines Produktionszyklus zunächst zu heizen und danach wieder zu kühlen. Eine Werkzeugform in einer Maschine zur Verarbeitung von Polyurethan-Formmassen beispielsweise kann vor dem Einspritzen der duroplastischen Reaktionskomponenten aufgeheizt werden, um die Reaktivität sicherzustellen. Dazu wird zunächst heißes Wasser aus dem Hochtemperatur-Primärkreislauf durch die Form geleitet. In dem etwa 400 Sekunden währenden Zyklus reagiert das Gemisch und härtet aus, wobei freie Wärme entsteht. Diese wird abgeführt, indem Wasser aus dem Mittel- oder Niedrigtemperatur-Primärkreislauf durch die Form geleitet wird.

Durch die Abkühlung der Form zum Ende des Zyklus wird die anschließende Entformung erleichtert.

Die Erfindung wird nachfolgend mit Bezug auf das in der Zeichnung dargestellte Ausführungsbeispiel näher erläutert. Die Figuren zeigen jeweils in schematischer Seitenansicht:
- Fig. 1: ein mit drei unterschiedlichen Mischerweicheneinheiten ausgestattetes Temperier- und Wärmerückgewinnungssystem;
- Fig. 2a - 2c: jeweils eine Mischerweicheneinheit
- Fig. 3a - 3cdas: Temperier- und Wärmerückgewinnungssystem nach Fig. 1 im Betrieb mit jeweils einer der Mischerweicheneinheiten nach den Fig. 2a bis 2c und
- Fig. 4: zwei miteinander verbundene Wärmespeicher.

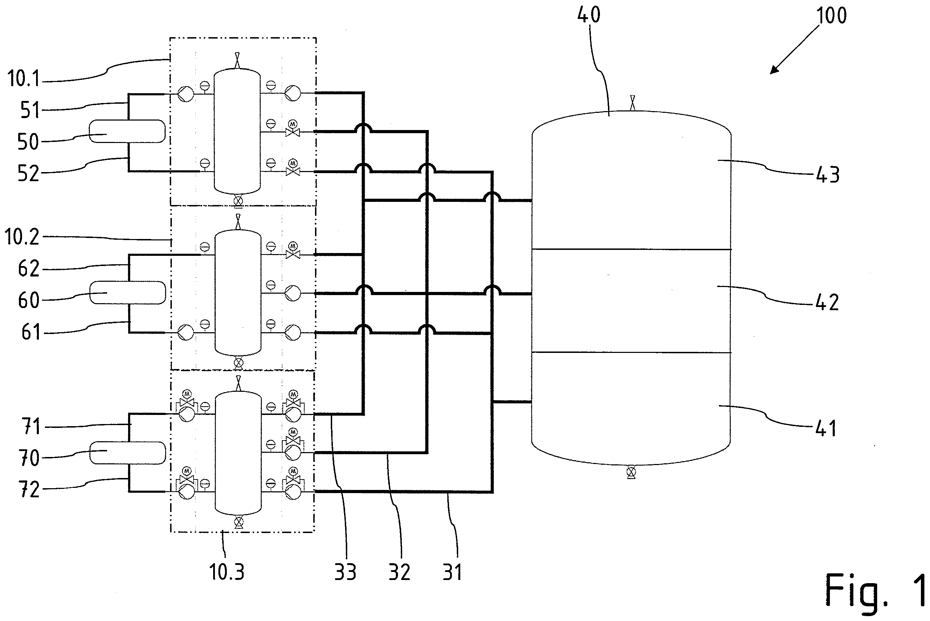

Figur 1 zeigt ein Temperier- und Wärmerückgewinnungssystems 100 in einer Gesamtübersicht. Rechts ist ein Wärmespeicher 40 angeordnet, der als Schichtspeicher ausgeführt ist. Die Teilwärmespeicher 41, 42, 43 sind hier als drei Zonen entlang der Höhe des Wärmespeichers 40 definiert, ohne dass bauliche Trennungen zwischen den Zonen vorliegen, so dass sich die Temperaturgrenzen dazwischen im Betrieb dynamisch verschieben können.

Von dem Wärmespeicher 40 führt ein Dreifach-Primärleitungsrohrleitungsstrang mit:
- der Primärleitung 31 für Niedrigtemperatur,
- der Primärleitung 32 für Mitteltemperatur und
- der Primärleitung 33 für Hochtemperatur
durch den Produktionsbetrieb und verzweigt zu verschiedenen Mischerweicheneinheiten 10.1, 10.2, 10.3.

Auf der Sekundärseite, in Figur 1 links, sind Produktionsmaschinen 50, 60, 70 angeordnet, die über Vorlaufleitungen 51, 61, 71 und Rücklaufleitungen 52, 62, 72 mit den Mischerweicheneinheiten 10.1, 10.2, 10.3. verbunden sind. Eine erste Produktionsmaschine 50 ist dabei als reine Wärmesenke anzusehen, eine zweite Produktionsmaschine 60 als reine Wärmequelle, und eine dritte Produktionsmaschine 70 ist zeitweise Quelle oder Senke.

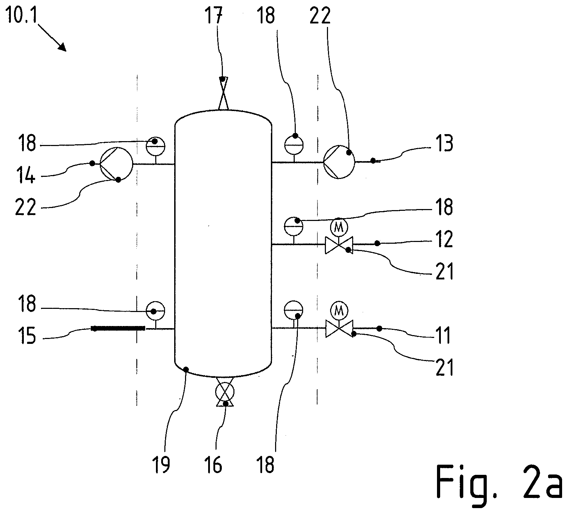

Die Figuren 2a bis 2c zeigen jeweils eine Mischerweiche 10.1, 10.2, 10.3 im Detail, die innerhalb des erfindungsgemäßen Temperier- und Wärmerückgewinnungssystems 100 einsetzbar sind. Beschrieben wird der Betrieb mit Wasser als Temperierfluid.

Eine Mischerweicheneinheit 10.1 gemäß Fig. 2a besteht im Wesentlichen aus einem Gehäuse mit einer Mischkammer 19, an die sich auf den Anschlüssen 11, 12, 13 auf einer Seite die wenigstens drei Primärleitungen 31, 32, 33 anschließen und auf der gegenüberliegenden Seite zwei Sekundärleitungen an den Anschlüssen 14, 15.

Die Lage der Anschlüsse 11 bis 15 bei der vertikal ausgerichteten Mischerweicheneinheit 10.1 gemäß Fig. 2a ist als schematisch anzusehen. Die sich jeweils gegenüberliegenden Anschlüsse wie insbesondere 13 und 14 sowie 11 und 15 liegen in etwa auf einer Höhe oder sie liegen jeweils auf halber Höhe benachbarter Primanschlüsse. Ein geringer Höhenversatz ist möglich, jedoch sollen stärkere Diagonalströmungen innerhalb der Mischkammer 19 vermieden werden.

Alle Leitungen 11, 12, 13, 14, 15 können über Absperrventile 18 verschlossen werden, um z. B. die Mischerweicheneinheit 10.1 zu Wartungs- und Reparaturzwecken· vollständig ausbauen zu können, ohne den Betrieb der übrigen Teile des Temperier und Wärmerückgewinnungssystems 100 unterbrechen zu müssen.

Weiterhin können an jeder der Leitungen 11 bis 15 Temperatursensoren vorgesehen sein, insbesondere an den Leitungen 14, 15 des Sekundärkreislaufs. Diese dienen insbesondere dazu, in Abhängigkeit von den Temperaturen im Sekundärkreislauf eine Umschaltung von einem primärseitigen Temperaturniveau auf das nächst benachbarte vorzunehmen.

An der Oberseite der Mischkammer 19 ist ein Entlüftungsventil 17 vorgesehen und an der Unterseite ein Schlammabscheider 16.

Bei dem in Figur 2a dargestellten Ausführungsbeispiel handelt es sich um eine Mischerweicheneinheit 10.1, die für den Betrieb mit einer Wärmesenke im Sekundärkreislauf eingesetzt wird, also beispielsweise bei einer Produktionsmaschine, die aufgeheizt werden muss. Dazu sind Pumpen 22 mit beiden oberen Anschlüssen der Mischerweicheneinheit 10.1 verbunden; sowohl beim Anschluss 13 für eine Primär-Hochtemperaturleitung 33 wie auch an einer Vorlaufleitung 51 des Sekundärkreislaufes. Dadurch wird eine starke gerichtete Strömung von der Primär-Hochtemperaturleitung 33 in die Vorlaufleitung 51 des Sekundärkreislaufes hinein erzeugt.

Der Rücklauf 52 des Sekundärkreislaufes geht in den unteren Bereich der Mischkammer 19 zurück. Je nachdem, auf welchem Temperaturniveau sich das zurückgeführte Wasser befindet, wird es am Anschluss 11 der Mischerweicheneinheit 10.1 in die Niedrigtemperatur-Primärleitung 31 oder am Anschluss 12 in die Mitteltemperatur-Primärleitung 32 geführt, wozu das jeweils zu den Anschlüssen 11, 12 gehörige, fernbetätigbare Ventil 21 entsprechend geöffnet bzw. geschlossen wird.

Die Pumpen 22 müssen nicht in unmittelbarer räumlicher Nähe zu der Mischkammer 19 angebracht sein, sondern können auch mit etwas Abstand stromauf- oder stromabwärts installiert sein.

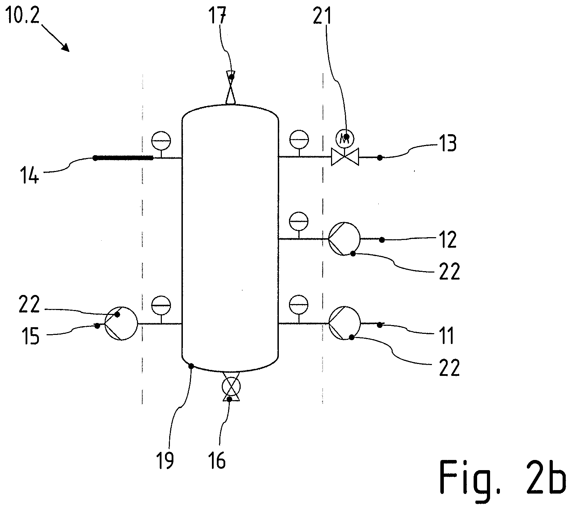

Figur 2b zeigt eine Mischerweicheneinheit 10.2, die hinsichtlich der Mischkammer 19 und der Leitungsanschlüsse 11 bis 15 zunächst gleichartig zur ersten Ausführungsform einer Mischerweicheneinheit 10.1 ausgeführt ist. Die Mischerweicheneinheit 10.2 ist jedoch für den Betrieb mit einer Wärmequelle, also beispielsweise einer zu kühlenden Maschine, so dass sich die Fließrichtungen an Ober- und Unterseite der Mischkammer 19 umkehren.

Auf der Sekundärkreislaufseite ist der Anschluss 15 nun mit der Vorlaufleitung 61 (vgl. Fig. 1) verbunden und der Anschluss 14 mit der Rücklaufleitung 62 (vgl. Fig. 1) oben. Aus der Niedrigtemperatur-Primärleitung 11 wird mittels einer Pumpe 22 Wasser in die Vorlaufleitung 61 gespeist. Alternativ oder zusätzlich kann Wasser aus der Mitteltemperatur-Primärleitung 12 übergeleitet werden, wozu auch dort eine Pumpe 22 vorgesehen ist. Zur Druckerhöhung im Sekundärkreislauf ist auch dort im Vorlauf 61 eine weitere Pumpe 22 vorgesehen. Das erwärmte Wasser wird am Rücklauf beim Anschluss 15 oben durch die Mischkammer 19 hindurch am Anschluss 13 in die Hochtemperatur-Primärleitung 33 (vgl. Fig. 1) geführt. Der Durchfluss ist mit dem Ventil 21 regelbar.

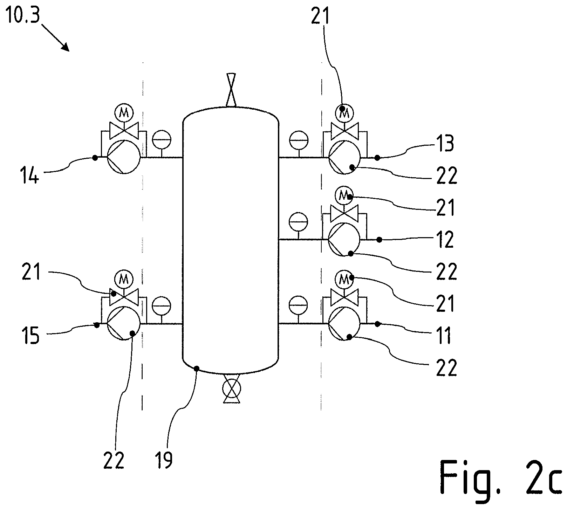

Figur 2c schließlich zeigt eine Ausführungsform einer erfindungsgemäßen Mischerweicheneinheit 10.3, die sowohl mit einer Wärmequelle wie auch mit einer Wärmesenke einsetzbar ist, also insbesondere mit einer Produktionsmaschine, die vor Produktionsbeginn aufgeheizt werden muss und im laufenden Produktionsbetrieb gekühlt werden muss.

Dazu ist die Mischerweicheneinheit 10.3 bei einem ansonsten den jeweiligen Ausführungsformen der Mischerweicheneinheiten 10.1 und 10.2 entsprechenden Aufbau mit je einer Pumpe 22 und je
einem Ventil 21 pro Anschluss 11, ... , 15 ausgestattet, so dass über eine elektronische Regeleinrichtung alle möglichen Strömungsverbindungen von einem der Primäranschlüsse 11 bis 13 zu einem der Sekundäranschlüsse 14 und 15 oder umgekehrt, eingestellt werden können, sofern sich die Strömungen nicht überkreuzen.

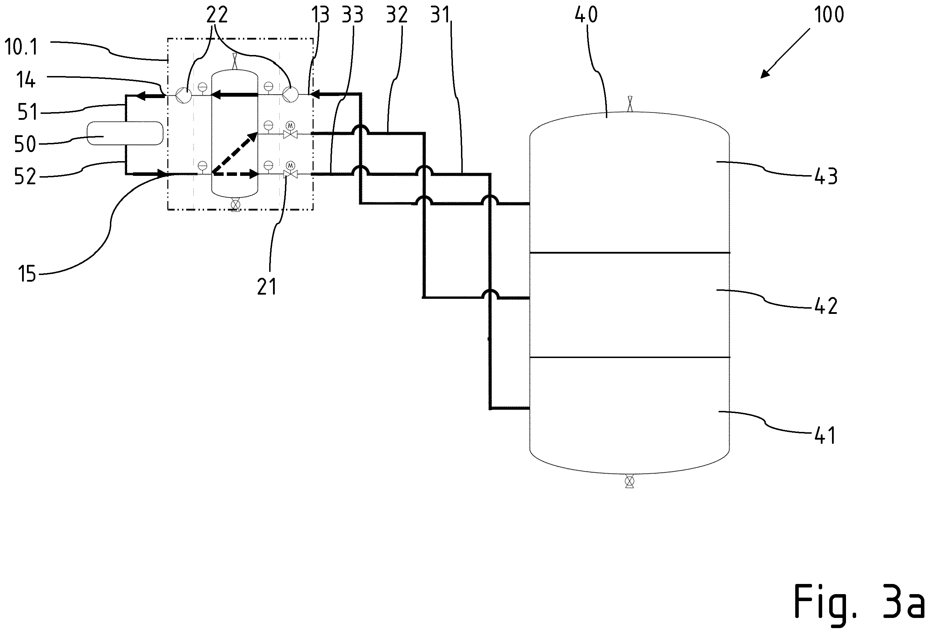

Die Figuren 3a bis 3c zeigen den jeweiligen Betrieb des erfindungsgemäßen Temperier- und Wärmerückgewinnungssystems 100 nach Figur 2, und zwar jeweils einzeln mit einer der in den Figuren 2a bis 2c dargestellten Mischerweicheneinheiten 10.1, 10.2 oder 10.3.

In Figur 3a wird eine als Wärmesenke wirkende Maschine 50 versorgt. Wasser wird über die Hochtemperatur-Primärleitung 33 aus dem Hochtemperatur-Teilwärmespeicher 43 abgezapft und der Mischerweicheneinheit 10.1 zugeführt. Dort erfolgt der Einlauf an einem oberen Anschluss 13 und geht quer durch die Mischkammer 19 in den Vorlauf 51 des Sekundärkreislaufes am Anschluss 14. Das Wasser läuft durch die Maschine 50 hindurch in den Rücklauf 52 und am Anschluss 15 zurück in die Mischkammer 19. Dort kann die Strömung, wie durch die Pfeile angedeutet, zum Anschluss 12 für die Mitteltemperatur-Primärleitung 32 geführt werden, indem das dortige Ventil geöffnet und das Ventil am unteren Anschluss 11 für die Niedrigtemperatur-Primärleitung 31 geschlossen wird. Das Wasser kann auch direkt in die Niedrigtemperatur-Primärleitung 31 übergeleitet werden.

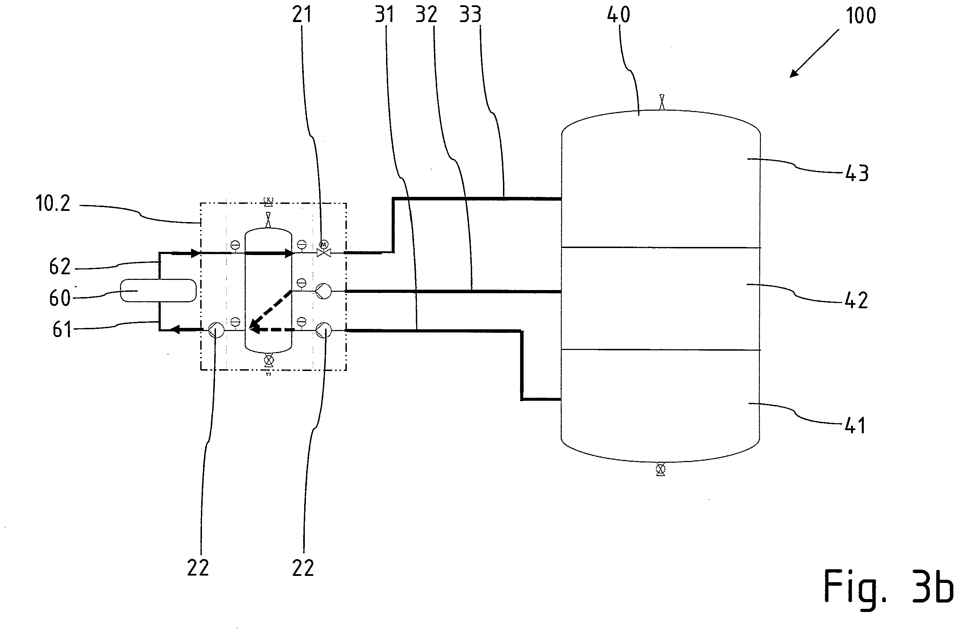

Figur 3b zeigt einen weiteren Betriebszustand des Temperier- und Wärmerückgewinnungssystems 100, bei dem eine Wärmequelle 60 benutzt wird, um im so genannten "Ernter-Betrieb" Wärme aus dem Sekundärkreislauf abzuziehen und das Temperaturniveau im Wärmespeicher 40 anzuheben, und zwar insbesondere in dem Hochtemperatur-Teilwärmespeicher 43. Dazu wird Wasser entweder aus dem Mitteltemperatur-Teilwärmespeicher 42 oder aus dem Niedrigtemperatur-Teilwärmespeicher 41 in den Sekundärkreislauf gepumpt, dessen Vorlauf 61 in diesem Fall mit dem sekundärseitigen, unteren Anschluss 15 an der Mischerweicheneinheit 10.2 verbunden ist. Der Rücklauf 62 auf der Sekundärseite ist an den oberen Anschluss 14 der Mischerweicheneinheit 10.2 angeschlossen. Das in der Maschine 60 auf das Hochtemperaturniveau erwärmte Wasser wird über die Hochtemperatur-Primärleitung 33 in den Hochtemperatur-Teilwärmespeicher 43 geleitet.

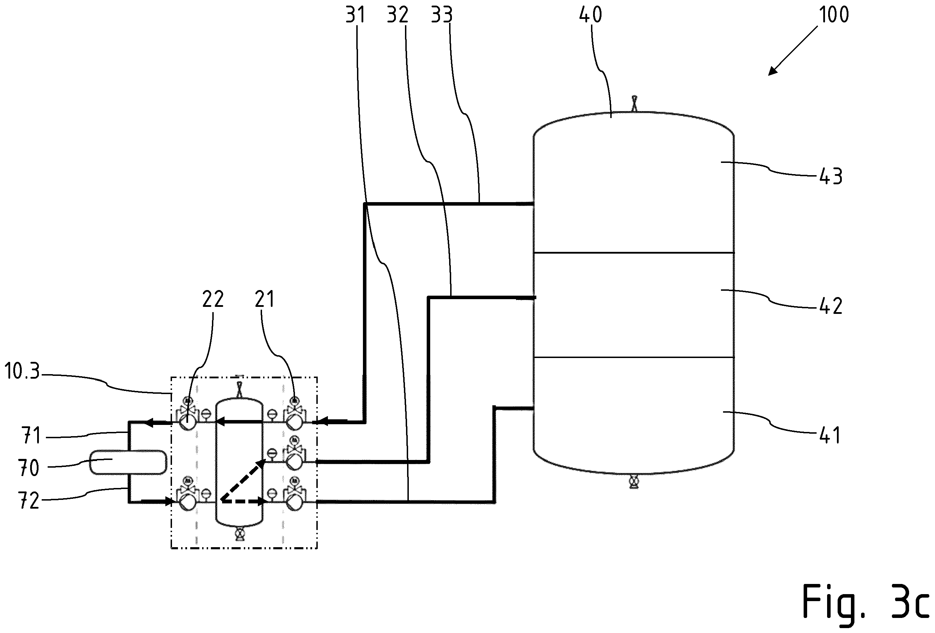

Figur 3c zeigt den gleichen Betriebszustand mit den gleichen Strömungswegen wie in Figur 3a, wobei jedoch eine andersartige Mischerweicheneinheit 10.3 eingesetzt wird, nämlich die sowohl bei einer Wärmequelle wie auch bei einer Wärmesenke einsetzbare Mischerweicheneinheit 10.3 gemäß Figur 2c.

Um die dargestellten Strömungsverhältnisse einzustellen, werden die Pumpen 22 an den oberen Anschlüssen 13, 14 eingeschaltet und die parallel geschalteten Ventile 21 geschlossen. Wasser läuft durch die Vorlaufleitung 71 zu einer Maschine 70, gibt dort Wärme ab und läuft über eine Rücklaufleitung 72 zum Anschluss 15 der Mischerweicheneinheit 10.3. Im Bereich des Anschlusses 15 ist das Ventil geöffnet und die Pumpe abgestellt. Auf der Primärseite ist entweder das Ventil zur Mitteltemperatur-Primärleitung 32 oder das Ventil zur Niedrigtemperatur-Primärleitung 31 geöffnet und das jeweils andere Ventil abgestellt. Die Pumpen 22 sind in den Leitungen, die mit den Anschlüssen 11, 12 der Mischerweicheneinheit 10.3 verbunden sind, in diesem Fall abgestellt.

Allen Betriebszuständen ist gemeinsam, dass im Gesamtsystem ein geschlossener Kreislauf erreicht wird, wenn auch Strömungen des Vorlaufs mit Strömungen des· Rücklaufs in einer gemeinsamen, nicht baulich unterteilten Mischkammer vorliegen. Systembedingte Wasserverluste treten also nicht ein. Um Volumenänderungen zu kompensieren, die auf Abkühl- und Erwärmungseffekten im Wasser beruhen, kann ein Ausgleichsgefäß vorgesehen sein, insbesondere direkt an dem Wärmespeicher 40.

Allerdings ist es nach der Erfindung jederzeit möglich, aus externen Quellen Wasser auf einem bestimmten Temperaturniveau in eine der drei Primärleitungen 31, 32, 33 einzuleiten und den zugehörigen Teilwärmespeicher 41, 42, 43 zu umgehen, falls für das gewünschte Temperaturniveau keine ausreichende Wassermenge im Wärmespeicher 40 vorhanden ist.

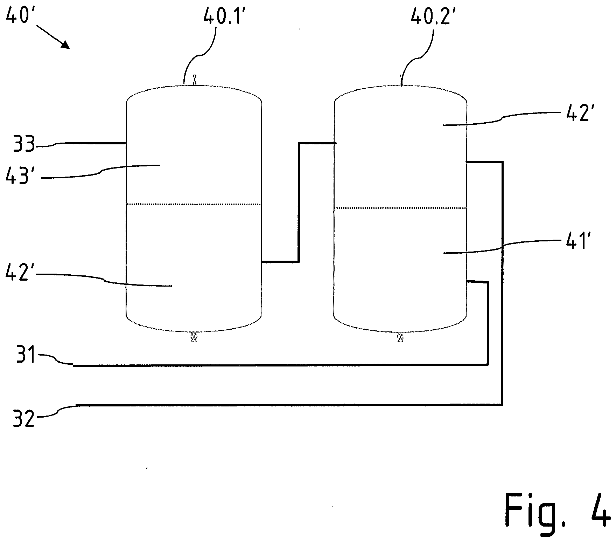

Figur 4 zeigt eine alternative Ausbildung eines Wärmespeichers 40'. Dieser besteht hier aus zwei Wärmespeichern 40'.1' und 40.2'. Beide Wärmespeicher 40.1', 40.2 sind als Schichtspeicher ausgebildet. Im linken Wärmespeicher 40.1' ist das Temperaturniveau insgesamt höher als im rechten Wärmespeicher 40.2'. Die Wärmespeicher 40.1' und 40.2' sind kaskadiert aufgebaut, indem ein Anschluss unten im Wärmespeicher 40.1', der einem relativ niedrigeren Temperaturniveau in diesem Wärmespeicher 40.1' entspricht, mit einem Anschluss oben im anderen Wärmespeicher 40.2', der einem relativ höheren Temperaturniveau in diesem Speicher entspricht, verbunden ist. Die hinsichtlich des Temperaturbereichs überlappenden und miteinander verbundenen Bereiche entsprechen einem Mitteltemperaturniveau und bilden einen Teilwärmespeicher 42' dafür. Von dort besteht eine Verbindung zu der Mitteltemperatur-Primärleitung 32.

Der obere Speicherbereich im linken Wärmespeicher 40.1' entspricht einem Teilwärmespeicher 43' für das Hochtemperaturniveau; dieser ist mit der Hochtemperatur-Primärleitung 33 verbunden.

Der untere Speicherbereich im rechten Wärmespeicher 40.2' entspricht einem Teilwärmespeicher 41' für das Niedrigtemperaturniveau; dieser ist mit der Niedrigtemperatur-Primärleitung 31 verbunden.

Die kaskadierte Bauweise ermöglicht eine kosten- und platzsparende Verwendung von Behältern mit begrenzter Höhe, ohne die erfindungsgemäßen Vorteile zu beeinträchtigen.

## Patentansprüche

1. Temperier- und Wärmerückgewinnungssystem (100), für wenigstens eine mit einem Fluid temperierbare Maschine (50), wenigstens umfassend:
- wenigstens eine Mischerweicheneinheit (10.1) mit jeweils einer vertikal ausgerichteten Mischkammer (19) und
- drei Teilwärmespeicher (41, 42, 43) für drei unterschiedliche Temperaturniveaus TN, TM, TH, als Niedrigtemperatur-, Mitteltemperatur- und Hochtemperatur-Teilwärmespeicher,
wobei:
- von jedem Teilwärmespeicher (41, 42, 43) jeweils wenigstens eine Primärleitung (31, 32, 33) zu der wenigstens einen Mischerweicheneinheit (10.1) geführt ist, in welcher jeweils:
- die Primärleitungen (31, 32, 33) dem Temperaturniveau entsprechend von unten nach oben übereinander liegend an einer der Seitenwände der Mischkammer (19) münden;
- ein erster und ein zweiter Anschluss (14, 15) für einen Sekundärkreislauf an einer gegenüberliegenden Seitenwand münden;
- der erste Anschluss (14) für den Sekundärkreislauf auf der Höhe einer Hochtemperatur-Primärleitung (33) oder auf halber Höhe benachbarter Hochtemperatur- und Mitteltemperatur- Primärleitungen (33,32) angeordnet ist und der zweite Anschluss (15) auf der Höhe der Niedrigtemperatur-Primärleitung (31) oder auf halber Höhe zwischen den benachbarten Mitteltemperatur- und Niedrigtemperatur-Primärleitungen (31, 32) angeordnet ist
- das Fluid von dem Wärmespeicher (40; 40') zu der temperierbaren Maschine (50) leitbar ist, welche in den Sekundärkreislauf mit genau je einer Vor- und einer Rücklaufleitung (51, 52) eingebunden ist, und zurück,
**dadurch gekennzeichnet,**
- **dass** im Sekundärkreislauf in der Vorlaufleitung (51) wenigstens eine Pumpe (22) angeordnet ist;
- **dass** im Primärkreislauf im Zulauf der Hochtemperatur-Primärleitung (33) eine Pumpe (22) angeordnet ist und in den anderen Primärleitungen (31, 32) jeweils wenigstens ein Ventil (21) angeordnet ist;
- **dass** die Mischkammer (19) baulich nicht unterteilt ist und mittels der Pumpen (22) und der Ventile (21) folgende Strömungen einstellbar sind:
▪ eine direkte Durchströmung der Mischkammer (19) von der Hochtemperatur-Primärleitung (33) zum ersten Anschluss (14) der Vorlaufleitung (51) n;
▪ und eine direkte Durchströmung der Mischkammer (19) von dem ersten Anschluss (15) der Rücklaufleitung (52) zur Niedrigtemperatur-Primärleitung (31) und
▪ eine Diagonalströmung von dem ersten Anschluss (15) der Rücklaufleitung (52) des Sekundärkreislaufs zu der Mitteltemperatur-Primärleitung (32) ermöglicht ist.

2. Temperier- und Wärmerückgewinnungssystem (100), für wenigstens eine mit einem Fluid temperierbare Maschine (60), wenigstens umfassend:
- wenigstens eine Mischerweicheneinheit (10.2) mit jeweils einer vertikal ausgerichteten Mischkammer (19) und
- drei Teilwärmespeicher (41, 42, 43; 41', 42', 43') für drei unterschiedliche Temperaturniveaus TN, TM, TH, als Niedrigtemperatur-, Mitteltemperatur-und Hochtemperatur-Teilwärmespeicher,
wobei:
- von jedem Teilwärmespeicher (41, 42, 43; 41', 42', 43') jeweils wenigstens eine Primärleitung (31, 32, 33) zu der wenigstens einen Mischerweicheneinheit (10.2) geführt ist, in welcher jeweils:
- die Primärleitungen (31, 32, 33) dem Temperaturniveau entsprechend von unten nach oben übereinander liegend an einer der Seitenwände der Mischkammer (19) münden;
- ein erster und ein zweiter Anschluss (14, 15) für jeweils einen Sekundärkreislauf an einer gegenüberliegenden Seitenwand münden;
- der erste Anschluss (14) für den Sekundärkreislauf auf der Höhe einer Hochtemperatur-Primärleitung (33) oder auf halber Höhe benachbarten Hochtemperatur- und Mitteltemperatur-Primärleitungen (33,32) angeordnet ist und der zweite Anschluss (15) auf der Höhe der Niedrigtemperatur-Primärleitung (31) oder auf halber Höhe zwischen den benachbarten Niedertemperatur- und Mitteltemperatur- Primärleitungen (31, 32) angeordnet ist;
- das Fluid von dem Wärmespeicher (40; 40') zu der temperierbaren Maschine (60) leitbar ist, welche in den Sekundärkreislauf mit genau je einer Vor- und einer Rücklaufleitung (61, 62) eingebunden ist, und zurück,
**dadurch gekennzeichnet,**
- **dass** im Sekundärkreislauf in der Vorlaufleitung (61) wenigstens eine Pumpe (22) angeordnet ist;
- **dass** im Primärkreislauf im Zulauf der Niedrigtemperatur-Primärleitung (31) und im Zulauf der Mitteltemperatur-Primärleitung (32) jeweils eine Pumpe (22) angeordnet ist und im Zulauf der Hochtemperatur-Primärleitung (33) ein Ventil (21) angeordnet ist;
- **dass** die Mischkammer (19) baulich nicht unterteilt ist und mittels der Pumpen (22) und der Ventile (21) folgende Strömungen einstellbar sind:
▪ eine direkte Durchströmung der Mischkammer (19) von dem ersten Anschluss (14) der Rücklaufleitung (62) zu der Hochtemperatur-Primärleitung (33) ;
▪ und eine direkte Durchströmung der Mischkammer (19) von der Niedrigtemperatur-Primärleitung (31) zu dem zweiten Anschluss (15) der Vorlaufleitung (61) und
▪ eine Diagonalströmung zwischen der Mitteltemperatur-Primärleitung (32) zu dem zweiten Anschluss (15) der Vorlaufleitung (61) des Sekundärkreislaufs ermöglicht ist.

3. Temperier- und Wärmerückgewinnungssystem (100), für wenigstens eine mit einem Fluid temperierbare Maschine (70), wenigstens umfassend:
- wenigstens eine Mischerweicheneinheit (10.3) mit einer vertikal ausgerichteten Mischkammer (19) und
- drei Teilwärmespeicher (41, 42, 43; 41', 42', 43') für drei unterschiedliche Temperaturniveaus TN, TM, TH, als Niedrigtemperatur-, Mitteltemperatur- und Hochtemperatur-Teilwärmespeicher,
wobei:
- von jedem Teilwärmespeicher (41, 42, 43; 41', 42', 43') jeweils wenigstens eine Primärleitung (31, 32, 33) zu der wenigstens einen Mischerweicheneinheit (10.3) geführt ist, in welcher jeweils:
- die Primärleitungen (31, 32, 33) dem Temperaturniveau entsprechend von unten nach oben übereinander liegend an einer der Seitenwände der Mischkammer (19) münden;
- ein erster und ein zweiter Anschluss (14, 15) für jeweils einen Sekundärkreislauf an einer gegenüberliegenden Seitenwand münden;
- der erste Anschluss (14) für den Sekundärkreislauf auf der Höhe einer Hochtemperatur-Primärleitung (33) oder auf halber Höhe benachbarter Hochtemperatur- und Mitteltemperatur-Primärleitungen (33,32) angeordnet ist und der zweite Anschluss (15) auf der Höhe der Niedrigtemperatur-Primärleitung (31) oder auf halber Höhe zwischen den benachbarten Niedertemperatur- und Mitteltemperatur- Primärleitungen (31, 32) angeordnet ist;
- das Fluid von dem Wärmespeicher (40; 40') zu der temperierbaren Maschine (70) leitbar ist, welche in den Sekundärkreislauf mit genau je einer Vor- und einer Rücklaufleitung (71, 72) eingebunden ist, und zurück,
**dadurch gekennzeichnet,**
- **dass** im Sekundärkreislauf in der Vorlauf- und der Rücklaufleitung (71, 72) jeweils wenigstens eine Pumpe (22) und ein Regelventil (21) angeordnet sind, die jeweils parallel zueinander geschaltet sind;
- **dass** im Primärkreislauf in jeder Primärleitung (31, 32, 33) jeweils wenigstens eine Pumpe (22) und ein Regelventil (21) angeordnet sind, die jeweils parallel zueinander geschaltet sind;
- **dass** die Mischkammer (19) baulich nicht unterteilt ist und mittels der Pumpen (22) und der Ventile (21) folgende Strömungen einstellbar sind:
▪ eine direkte Durchströmung der Mischkammer (19) von der Hochtemperatur-Primärleitung (33) zum ersten Anschluss (14) der Vorlaufleitung (71) ;
▪ und eine direkte Durchströmung der Mischkammer (19) von der Niedrigtemperatur-Primärleitung (31) zu dem zweiten Anschluss (15) der Rücklaufleitung (72) und
▪ eine Diagonalströmung von dem zweiten Anschluss (15) der Rücklaufleitung (72) des Sekundärkreislaufs zu der Mitteltemperatur-Primärleitung (32) .

4. Temperier- und Wärmerückgewinnungssystem (100) nach wenigstens einem der Ansprüche 1 bis 3, **dadurch gekennzeichnet, dass** die Teilwärmespeicher (41, 42, 43; 41', 42', 43') durch unterschiedliche Temperaturzonen in einem Schichtspeicher (40; 40.1', 40.2') gebildet sind.

5. Temperier- und Wärmerückgewinnungssystem (100) nach Anspruch 4, **dadurch gekennzeichnet, dass** mehrere Schichtspeicher (40.1', 40.2') vorgesehen sind, bei denen in einem Temperaturbereich überlappende Temperaturzonen über eine Rohrleitung miteinander verbunden sind.

6. Verfahren zum Betreiben eines Temperier- und Wärmerückgewinnungssystems (100) nach einem der vorhergehenden Ansprüche, zum Temperieren wenigstens einer als Wärmequelle wirkenden Maschine (60, 70) und zum Rückgewinnen von Wärme von wenigstens einer als Wärmesenke wirkenden Maschine (50, 70) mit wenigstens folgenden Schritten:
- Bereitstellen je einer Fluidmenge auf einem Hochtemperaturbereich in dem Hochtemperatur-Teilwärmespeicher (43), auf einem Mitteltemperaturbereich in dem Mitteltemperatur-Teilwärmespeicher (42) und auf einem Niedrigtemperaturbereich in dem Niedrigtemperatur-Teilwärmespeicher (41); und
- Zuführen eines Fluids aus dem Hoch- oder Mitteltemperatur-Teilwärmespeicher (43, 42) durch eine Mischerweicheneinheit (10.1, 10.3) in einen Vorlauf (51, 71) zu einer als Wärmesenke wirkenden Maschine (50, 70) und Rückführen des abgekühlten Fluids in einen der Teilwärmespeicher (42, 41), welche ein niedrigeres Temperaturniveau aufweisen, in Abhängigkeit von dem Temperaturniveau des Fluids in der Rücklaufleitung (52, 72);
oder alternativ dazu
- Zuführen eines Fluids aus dem Niedrig- oder Mitteltemperatur-Teilwärmespeicher (41, 42) durch eine Mischerweicheneinheit (10.2, 10.3) in einen Vorlauf (61) zu einer als Wärmequelle wirkenden Maschine (60) und Rückführen des aufgeheizten Fluids in einen der Teilwärmespeicher (42, 43), welche ein höheres Temperaturniveau aufweisen, in Abhängigkeit von dem Temperaturniveau des Fluids in der Rücklaufleitung (62).

7. Verfahren nach Anspruch 6, **dadurch gekennzeichnet, dass** die Teilwärmespeicher (41, 42, 43; 41', 42', 43') durch unterschiedliche Temperaturzonen an einem Schichtspeicher (40; 40.1', 40.2') gebildet sind.

## Claims

1. Temperature control and heat recovery system (100), for at least one machine (50) which can be temperature-controlled by way of a fluid, at least comprising:
- at least one mixer/diverter unit (10.1) with in each case one vertically oriented mixing chamber (19), and
- three part heat accumulators (41, 42, 43) for three different temperature levels TN, TM, TH, as low temperature, medium temperature and high temperature part heat accumulators:
- in each case at least one primary line (31, 32, 33) being routed from each part heat accumulator (41, 42, 43) to the at least one mixer/diverter unit (10.1), in which in each case:
- the primary lines (31, 32, 33) open on one of the side walls of the mixing chamber (19) in a manner which lies above one another from bottom to top in accordance with the temperature level;
- a first and a second connector (14, 15) for a secondary circuit open on an opposite side wall;
- the first connector (14) for the secondary circuit is arranged at the level of a high temperature primary line (33) or at half the level of adjoining high temperature and medium temperature primary lines (33, 32), and the second connector (15) is arranged at the level of the low temperature primary line (31) or at half the level between the adjoining medium temperature and low temperature primary lines (31, 32),
- it being possible for the fluid to be conducted from the heat accumulator (40; 40') to the machine (50) which can be temperature-controlled and is incorporated into the secondary circuit by way of precisely in each case one feed and one return line (51, 52), and back,
**characterized**
- **in that** at least one pump (22) is arranged in the feed line (51) in the secondary circuit;
- **in that** a pump (22) is arranged in the feed of the high temperature primary line (33) in the primary circuit, and in each case at least one valve (21) is arranged in the other primary lines (31, 32);
- and **in that** the mixing chamber (19) is not divided structurally, and the following flows can be set by means of the pumps (22) and the valves (21):
▪ a direct throughflow of the mixing chamber (19) from the high temperature primary line (33) to the first connector (14) of the feed line (51);
▪ and a direct throughflow of the mixing chamber (19) from the first connector (15) of the return line (52) to the low temperature primary line (31), and
▪ a diagonal flow from the first connector (15) of the return line (52) of the secondary circuit to the medium temperature primary line (32) is made possible.

2. Temperature control and heat recovery system (100), for at least one machine (60) which can be temperature-controlled by way of a fluid, at least comprising:
- at least one mixer/diverter unit (10.2) with in each case one vertically oriented mixing chamber (19), and
- three part heat accumulators (41, 42, 43; 41', 42', 43') for three different temperature levels TN, TM, TH, as low temperature, medium temperature and high temperature part heat accumulators:
- in each case at least one primary line (31, 32, 33) being routed from each part heat accumulator (41, 42, 43; 41', 42', 43') to the at least one mixer/diverter unit (10.2), in which in each case:
- the primary lines (31, 32, 33) open on one of the side walls of the mixing chamber (19) in a manner which lies above one another from bottom to top in accordance with the temperature level;
- a first and a second connector (14, 15) for in each case one secondary circuit open on an opposite side wall;
- the first connector (14) for the secondary circuit is arranged at the level of a high temperature primary line (33) or at half the level of adjoining high temperature and medium temperature primary lines (33, 32), and the second connector (15) is arranged at the level of the low temperature primary line (31) or at half the level between the adjoining low temperature and medium temperature primary lines (31, 32),
- it being possible for the fluid to be conducted from the heat accumulator (40; 40') to the machine (60) which can be temperature-controlled and is incorporated into the secondary circuit by way of precisely in each case one feed and one return line (61, 62), and back,
**characterized**
- **in that** at least one pump (22) is arranged in the feed line (61) in the secondary circuit;
- **in that** in each case one pump (22) is arranged in the feed of the low temperature primary line (31) and in the feed of the medium temperature primary line (32) in the primary circuit, and a valve (21) is arranged in the feed of the high temperature primary line (33);
- and **in that** the mixing chamber (19) is not divided structurally, and the following flows can be set by means of the pumps (22) and the valves (21):
▪ a direct throughflow of the mixing chamber (19) from the first connector (14) of the return line (62) to the high temperature primary line (33);
▪ and a direct throughflow of the mixing chamber (19) from the low temperature primary line (31) to the second connector (15) of the feed line (61), and
▪ a diagonal flow from the medium temperature primary line (32) to the second connector (15) of the feed line (61) of the secondary circuit is made possible.

3. Temperature control and heat recovery system (100), for at least one machine (70) which can be temperature-controlled by way of a fluid, at least comprising:
- at least one mixer/diverter unit (10.3) with a vertically oriented mixing chamber (19), and
- three part heat accumulators (41, 42, 43; 41', 42', 43') for three different temperature levels TN, TM, TH, as low temperature, medium temperature and high temperature part heat accumulators:
- in each case at least one primary line (31, 32, 33) being routed from each part heat accumulator (41, 42, 43; 41', 42', 43') to the at least one mixer/diverter unit (10.3), in which in each case:
- the primary lines (31, 32, 33) open on one of the side walls of the mixing chamber (19) in a manner which lies above one another from bottom to top in accordance with the temperature level;
- a first and a second connector (14, 15) for in each case one secondary circuit open on an opposite side wall;
- the first connector (14) for the secondary circuit is arranged at the level of a high temperature primary line (33) or at half the level of adjoining high temperature and medium temperature primary lines (33, 32), and the second connector (15) is arranged at the level of the low temperature primary line (31) or at half the level between the adjoining low temperature and medium temperature primary lines (31, 32),
- it being possible for the fluid to be conducted from the heat accumulator (40; 40') to the machine (70) which can be temperature-controlled and is incorporated into the secondary circuit by way of precisely in each case one feed and one return line (71, 72), and back,
**characterized**
- **in that** in each case at least one pump (22) and one regulating valve (21) which are connected in each case in parallel with one another are arranged in the feed and the return line (71, 72) in the secondary circuit;
- **in that** in each case at least one pump (22) and one regulating valve (21) which are connected in each case in parallel with one another are arranged in each primary line (31, 32, 33) in the primary circuit;
- and **in that** the mixing chamber (19) is not divided structurally, and the following flows can be set by means of the pumps (22) and the valves (21):
▪ a direct throughflow of the mixing chamber (19) from the high temperature primary line (33) to the first connector (14) of the feed line (71);
▪ and a direct throughflow of the mixing chamber (19) from the low temperature primary line (31) to the second connector (15) of the return line (72), and
▪ a diagonal flow from second connector (15) of the return line (72) of the secondary circuit to the medium temperature primary line (32).

4. Temperature control and heat recovery system (100) according to at least one of Claims 1 to 3, **characterized in that** the part heat accumulators (41, 42, 43; 41', 42', 43') are formed by way of different temperature zones in a stratified accumulator (40; 40.1', 40.2').

5. Temperature control and heat recovery system (100) according to Claim 4, **characterized in that** a plurality of stratified accumulators (40.1', 40.2') are provided, in the case of which temperature zones which overlap in a temperature range are connected to one another via a pipe line.

6. Method for operating a temperature control and heat recovery system (100) according to one of the preceding claims, in order to control the temperature of at least one machine (60, 70) which acts as a heat source, and in order to recover heat from at least one machine (50, 70) which acts as a heat sink, comprising at least the following steps:
- providing of in each case one fluid quantity in a high temperature range in the high temperature part heat accumulator (43), in a medium temperature range in the medium temperature part heat accumulator (42), and in a low temperature range in the low temperature part heat accumulator (41);
and
- feeding of a fluid from the high or medium temperature part heat accumulator (43, 42) through a mixer/diverter unit (10.1, 10.3) into a feed (51, 71) to a machine (50, 70) which acts as a heat sink, and returning of the cooled fluid into one of the part heat accumulators (42, 41) which have a lower temperature level, in a manner which is dependent on the temperature level of the fluid in the return line (52, 72);
or, as an alternative to this,
- feeding of a fluid from the low or medium temperature part heat accumulator (41, 42) through a mixer/diverter unit (10.2, 10.3) into a feed (61) to a machine (60) which acts as a heat source, and returning of the heated fluid into one of the part heat accumulators (42, 43) which have a higher temperature level, in a manner which is dependent on the temperature level of the fluid in the return line (62).

7. Method according to Claim 6, **characterized in that** the part heat accumulators (41, 42, 43; 41', 42', 43') are formed by way of different temperature zones in a stratified accumulator (40; 40.1', 40.2').

## Revendications

1. Système de régulation de température et de récupération de chaleur (100) destiné à au moins une machine (50) pouvant être régulée en température avec un fluide, ledit système comprenant au moins :
- au moins une unité de commutation de mélangeur (10.1) pourvue chacune d'une chambre de mélange (19) orientée verticalement et
- trois parties de réservoirs de chaleur (41, 42, 43) destinées à trois niveaux de température différents TN, TM, TH, comme parties de réservoir de chaleur à basse température, à moyenne température et à haute température :
- au moins une conduite primaire (31, 32, 33) étant amenée depuis chaque partie de réservoir de chaleur (41, 42, 43) à l'au moins une unité de commutation de mélangeur (10.1), dans chacune desquelles :
- les conduites primaires (31, 32, 33) débouchent sur l'une des parois latérales de la chambre de mélange (19) en étant superposées de bas en haut en fonction du niveau de température ;
- un premier et un deuxième raccord (14, 15) destinés à un circuit secondaire débouchant sur une paroi latérale opposée ;
- le premier raccord (14) destiné au circuit secondaire étant disposé au niveau d'une conduite primaire à haute température (33) ou à mi-hauteur des conduites primaires à haute température et à moyenne température adjacentes (33, 32) et le deuxième raccord (15) étant disposé au niveau de la conduite primaire à basse température (31) ou à mi-hauteur entre les conduites primaires à moyenne température et à basse température adjacentes (31, 32),
- le fluide pouvant être amené du réservoir de chaleur (40 ; 40') à la machine (50) pouvant être régulée en température, laquelle est intégrée dans le circuit secondaire comportant exactement une conduite d'alimentation et une conduite de retour (51, 52), et inversement,
**caractérisé en ce que**
- au moins une pompe (22) est disposée dans le circuit secondaire dans la conduite d'alimentation (51) ;
- une pompe (22) est disposée dans le circuit primaire à l'entrée de la conduite primaire à haute température (33) et au moins une vanne (21) est disposée dans chacune des autres conduites primaires (31, 32) ;
- la chambre de mélange (19) n'est pas subdivisée structurellement et les écoulements suivants peuvent être réglés au moyen des pompes (22) et des vannes (21) :
▪ un écoulement direct à travers la chambre de mélange (19) depuis la conduite primaire à haute température (33) vers le premier raccord (14) de la conduite d'alimentation (51) ;
▪ et un écoulement direct à travers la chambre de mélange (19) depuis le premier raccord (15) de la conduite de retour (52) vers la conduite primaire à basse température (31) et
▪ un écoulement diagonal étant possible depuis le premier raccord (15) de la conduite de retour (52) du circuit secondaire à la conduite primaire à moyenne température (32).

2. Système de régulation de température et de récupération de chaleur (100) destiné à au moins une machine (60) pouvant être régulée en température avec un fluide, ledit système comprenant au moins :
- au moins une unité de commutation de mélangeur (10.2) pourvue chacune d'une chambre de mélange (19) orientée verticalement et
- trois parties de réservoir de chaleur (41, 42, 43 ; 41', 42', 43') destinées à trois niveaux de température différents TN, TM, TH, comme parties de réservoir de chaleur à basse température, à moyenne température et à haute température :
- au moins une conduite primaire (31, 32, 33) étant amenée de chaque partie de réservoir de chaleur (41, 42, 43 ; 41', 42', 43') à l'au moins une unité de commutation de mélangeur (10.2), dans chacune desquelles :
- les conduites primaires (31, 32, 33) débouchent sur l'une des parois latérales de la chambre de mélange (19) en étant superposées de bas en haut en fonction du niveau de température :
- un premier et un deuxième raccord (14, 15) destinés chacun à un circuit secondaire débouchant sur une paroi latérale opposée ;
- le premier raccord (14) destiné au circuit secondaire étant disposé au niveau d'une conduite primaire à haute température (33) ou à mi-hauteur des conduites primaires à haute température et à moyenne température adjacentes (33, 32) et le deuxième raccord (15) étant disposé au niveau de la conduite primaire à basse température (31) ou à mi-chemin entre les conduites primaires à basse température et à moyenne température adjacentes (31, 32) ;
- le fluide pouvant être amené du réservoir de chaleur (40 ; 40') à la machine (60) pouvant être régulée en température, laquelle est intégrée dans le circuit secondaire comportant exactement une conduite d'alimentation et une conduite de retour (61, 62), et inversement,
**caractérisé en ce que**
- au moins une pompe (22) est disposée dans le circuit secondaire dans la conduite d'alimentation (61) ;
- une pompe (22) est disposée dans le circuit primaire à l'entrée de la conduite primaire à basse température (31) et à l'entrée de la conduite primaire à moyenne température (32) et une vanne (21) est disposée à l'entrée de la conduite primaire à haute température (33) ;
- la chambre de mélange (19) n'est pas structurellement subdivisée et les écoulements suivants peuvent être réglés au moyen des pompes (22) et des vannes (21) :
▪ un écoulement direct à travers la chambre de mélange (19) depuis le premier raccord (14) de la conduite de retour (62) vers la conduite primaire à haute température (33) ;
▪ et un écoulement direct à travers la chambre de mélange (19) de la conduite primaire à basse température (31) vers le deuxième raccord (15) de la conduite d'alimentation (61) et
▪ un écoulement diagonal étant possible entre la conduite primaire à moyenne température (32) et le deuxième raccord (15) de la conduite d'alimentation (61) du circuit secondaire.

3. Système de régulation de température et de récupération de chaleur (100) destiné à au moins une machine (70) pouvant être régulée en température avec un fluide, ledit système comprenant au moins :
- au moins une unité de commutation de mélangeur (10.3) pourvue d'une chambre de mélange (19) orientée verticalement et
- trois parties de réservoir de chaleur (41, 42, 43 ; 41', 42', 43') destinées à trois niveaux de température différents TN, TM, TH, comme parties de réservoir de chaleur à basse température, à moyenne température et à haute température :
- au moins une conduite primaire (31, 32, 33) étant amenée de chaque partie de réservoir de chaleur (41, 42, 43 ; 41', 42', 43') à l'au moins une unité de commutation de mélangeur (10.3), dans chacune desquelles :
- les conduites primaires (31, 32, 33) débouchent sur l'une des parois latérales de la chambre de mélange (19) en étant superposées de bas en haut en fonction du niveau de température ;
- un premier et un deuxième raccord (14, 15) destinés chacun à un circuit secondaire débouchant sur une paroi latérale opposée ;
- le premier raccord (14) destiné au circuit secondaire étant disposé au niveau d'une conduite primaire à haute température (33) ou à mi-hauteur des conduites primaires à haute température et à moyenne température adjacentes (33, 32) et le deuxième raccord (15) étant disposé au niveau de la conduite primaire à basse température (31) ou à mi-hauteur entre les conduites primaires à basse température et à moyenne température adjacentes (31, 32) ;
- le fluide pouvant être amené du réservoir de chaleur (40 ; 40') à la machine (70) pouvant être régulée en température, laquelle est intégrée dans le circuit secondaire comportant exactement une conduite d'alimentation et une conduite de retour (71, 72), et inversement,
**caractérisé en ce que**
- au moins une pompe (22) et une vanne de régulation (21), qui sont chacune montées en parallèle l'une à l'autre, sont disposées dans les conduites d'alimentation et de retour (71, 72) dans le circuit secondaire ;
- au moins une pompe (22) et une vanne de régulation (21), qui sont chacune montées en parallèle l'une à l'autre, sont disposées dans le circuit primaire dans chaque conduite primaire (31, 32, 33) ;
- la chambre de mélange (19) n'est pas structurellement subdivisée et les écoulements suivants peuvent être réglés au moyen des pompes (22) et des vannes (21) :
▪ un écoulement direct à travers la chambre de mélange (19) de la conduite primaire à haute température (33) au premier raccord (14) de la conduite d'alimentation (71) ;
▪ et un écoulement direct à travers la chambre de mélange (19) de la conduite primaire à basse température (31) au deuxième raccord (15) de la conduite de retour (72) et
▪ un écoulement diagonal du deuxième raccord (15) de la conduite de retour (72) du circuit secondaire à la conduite primaire à moyenne température (32).

4. Système de régulation de température et de récupération de chaleur (100) selon l'une au moins des revendications 1 à 3, **caractérisé en ce que** les parties de réservoir de chaleur (41, 42, 43 ; 41', 42', 43') sont formées par différentes zones de température dans un réservoir stratifié (40 ; 40.1', 40.2').

5. Système de régulation de température et de récupération de chaleur (100) selon la revendication 4, **caractérisé en ce que** plusieurs réservoirs stratifiés (40.1', 40.2') sont prévus dans lesquels des zones de température se chevauchant dans une plage de température sont reliées entre elles par une canalisation.

6. Procédé de fonctionnement d'un système de régulation de température et de récupération de chaleur (100) selon l'une des revendications précédentes, pour réguler en température au moins une machine (60, 70) fonctionnant en source de chaleur et pour récupérer la chaleur d'au moins une machine (50, 70) fonctionnant en dissipateur thermique, le procédé comprenant au moins les étapes suivantes :
- fournir une quantité de fluide dans une zone à haute température dans la partie de réservoir de chaleur à haute température (43), dans une zone à moyenne température dans la partie de réservoir de chaleur à moyenne température (42) et dans une zone à basse température dans la partie de réservoir de chaleur à basse température (41) ;
et
- amener un fluide de la partie de réservoir de chaleur à haute ou moyenne température (43, 42) par le biais d'une unité de commutation de mélangeur (10.1, 10.3) jusque dans une alimentation (51, 71) menant à une machine (50, 70) fonctionnant comme un dissipateur thermique et ramener le fluide refroidi dans l'une des parties de réservoir de chaleur (42, 41), qui ont un niveau de température plus bas, en fonction du niveau de température du fluide dans la conduite de retour (52, 72) ;
ou en variante
- amener un fluide de la partie de réservoir de chaleur à basse ou moyenne température (41, 42) par le biais d'une unité de commutation de mélangeur (10.2, 10.3) jusque dans une alimentation (61) menant à une machine (60) fonctionnant en tant que source de chaleur et ramener le fluide chauffé à l'une des parties de réservoir de chaleur (42, 43), qui ont un niveau de température plus élevé, en fonction du niveau de température du fluide dans la conduite de retour (62).

7. Procédé selon la revendication 6, **caractérisé en ce que** les parties de réservoir de chaleur (41, 42, 43 ; 41', 42', 43') sont formées par différentes zones de température au niveau d'un réservoir stratifié (40 ; 40.1', 40.2').
